# EUROPEAN PATENT SPECIFICATION

(11) **EP 2 182 643 B1**
(45) Date of publication and mention of the grant of the patent: **15.10.2014**
(21) Application number: 09252460.2
(22) Date of filing: 21.10.2009
(51) Int. Cl.: H04B 1/38

(54) **Modular modem**
Modulares Modem
Modem modulaire

(30) Priority: 31.10.2008 HK 08112025
(43) Date of publication of application: 05.05.2010
(73) Proprietor: Smart Gears Limited, Sheung Wan (HK)
(72) Inventor: Tang, Frank Kwok Kit, Hong Kong (HK); Lee, Wallace Ka Ming, Hong Kong (HK); Law, Way Ming Wai, Hong Kong (HK)
(74) Representative: Stevenson-Hill, Jack Patrick

(56) References cited:
- EP-A1- 0 657 834
- EP-A1- 1 675 043
- WO-A1-96/03810
- WO-A2-02/19266
- GB-A- 2 318 255

## Description

### Technical field

The present invention relates to a modem designed to connect a computer with a wireless cellular network. More specifically, it relates to a modem with hardware for integrated coupling to data-communications products to allow the modem to provide expanded functionality.

### Background of the Invention

Wireless communications play a significant role, and one of increasing importance, in the modern economy. The vigorous public demand for wireless products and services has been accompanied by the emergence of a wide variety of new systems. Along with these developments have come uncertainties as to the relative merits of the competing approaches, concerns regarding possible obsolescence and the requirement to accommodate legacy systems. This has lead to a need to provide a wireless modem capable of connecting between data-communications products having a number of different interfaces. Some publications illustrating the state of the art in this technology include WO96/03810, WO02/19266, EP1675043, GB2318255, EP0657834, EP0608899, US6456492, US2007/0138305 and WO01/31930.

Particularly to meet the requirements of the portable marketplace a wireless modem must provide extensive communications and computing capabilities, all in a physical size and weight that is practical for an individual on the move. The device should be sufficiently rugged to allow it to be used in extreme environmental conditions and it should also offer configuration versatility, ease of use and low cost. It is an object of the present invention to address the above needs or more generally to provide an improved wireless modem.

### Disclosure of the Invention

According to one aspect of the present invention there is provided a modular modem system for communication with a wireless cellular network and a host computer, the modular modem system comprising:
first and second housings;
a wireless modem circuit mounted in the first housing, the wireless modem circuit including a processor;
a host computer communications port in the first housing, the host computer communications port being connected to the wireless modem circuit for communication with the host computer;
an input in the first housing for coupling the wireless modem circuit to a suitable source of power;
an expansion circuit mounted in the second housing, the expansion circuit including at least one input/output (I/O) port,
mating first and second coupling means integral with a respective one of the first and second housings for mechanically connecting the housings and electrically connecting the wireless modem circuit to the expansion circuit for data communications therebetween and the supply of power from the modem circuit to the expansion circuit.

The terms "computer" or "host computer" as used herein broadly refers to any electronic device that manipulates data according to instructions and the system of the present invention has particular application for use with computers commonly used in industrial applications. Preferably the expansion circuit further includes an Ethernet transceiver or a Global Positioning System (GPS) receiver.

Preferably the mating first and second coupling means include first and second pluralities of contacts mutually engageable for electrically connecting the wireless modem circuit to the expansion circuit for data communications therebetween and the supply of power from the modem circuit to the expansion circuit, the first coupling means includes a first extending tongue, and the first plurality of contacts are disposed on the first tongue adjacent an outer end thereof, and the second coupling means includes a first recess of a shape complementary to the first tongue and, in which, the first tongue is slidably receivable and the second plurality of electrical contacts are disposed.

Preferably the first tongue has an upper surface a lower surface and a pair of side surfaces, a groove being defined in each of the side surfaces; and the first recess includes a projection slidably receivable in each groove upon connection of the first and second coupling means.

Preferably the second coupling means further includes a second extending tongue and the first coupling means includes a second recess of a shape complementary to the second tongue.

Preferably the wireless modem circuit and expansion circuit include respective printed circuit boards, the first and second housings are assembled from respective upper and lower shell pairs, the upper and lower surfaces of the first tongue being formed on the upper and lower shells respectively, the upper and lower shell pairs enclosing a respective printed circuit board, one of the printed circuit boards including a neck extending through the first tongue, and wherein the plurality of contacts are mounted to the neck.

Preferably the lower shells include base panel portions that are substantially coplanar when the first and second housings are connected. Preferably the second tongue and second recess are generally coplanar with the base panel portions. Preferably at least one transverse aperture is provided in the second tongue and is aligned with a threaded aperture when the first and second housings are connected such that the aligned apertures can receive a threaded fastener.

Preferably the upper surface of the first tongue includes two ribs received within slot portions formed in the first recess.

This invention thus provides a modem system which is effective and efficient in operational use, and which by its modular design provides the flexibility to readily configure and re-configure the components according to a large variety of needs. This saves substantial costs compared to the need to provide the functions of the different expansion circuits within one modem housing. The coupling means provide a rugged mechanical and electrical connection between the modules, ensuring reliable operation in extreme environmental conditions.

### Brief Description of the Drawings

Preferred forms of the present invention will now be described by way of example with reference to the accompanying drawings, wherein:
Figure 1 is a perspective view of a modular modem system according to an embodiment of the present invention showing the modem and expansion modules separated;
Figure 2 is an exploded view from above of the modular modem system of Fig. 1;
Figure 3 is a perspective view from below of the base shells of Fig.2;
Figure 4 is a schematic section through the two modules of Fig. 1 when connected;
Figure 5 is a block diagram schematic of the modem of Fig. 1, and
Figures 6 and 7 are block diagram schematics of alternative expansion modules.

### Description of the Preferred Embodiments

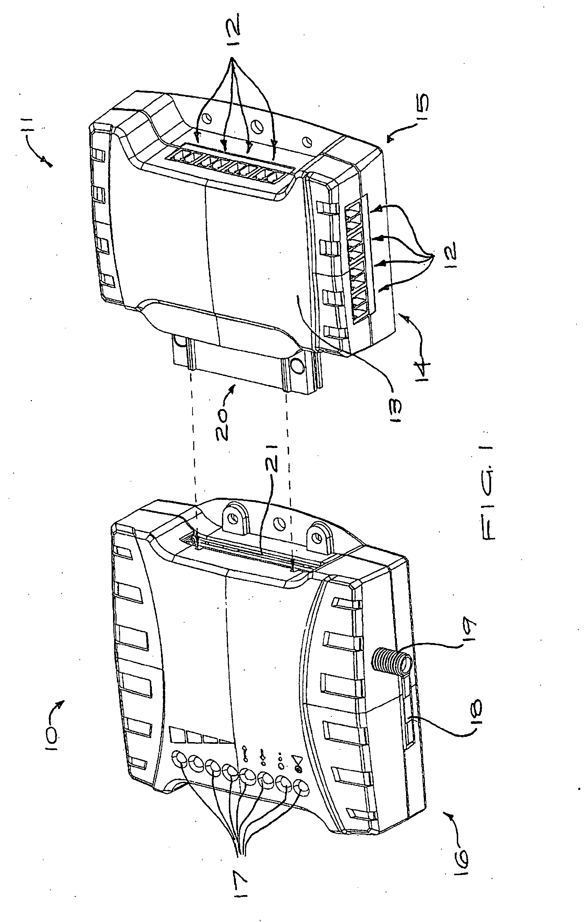

Referring now to Fig. 1 of the drawings, the modem system of the invention includes a wireless modem 10 and at least one expansion module 11. Different expansion modules may be connected to the modem 10 as required to expand its functionality in a modular manner. The expansion module 11 may allow a plurality of input/output (I/O) ports 12 to be connected to the modem 10, providing expanded communications capacity for applications such as remote monitoring and control.

The expansion module 11 includes a housing 15 which has upper and lower opposing sides 13, 14, broadly having a rectangular prismatic form. The I/O ports 12 may be provided in openings in three of the peripheral wall portions that extend between the sides 13, 14. The modem 10 has a housing 16 in which a row of windows 17 may be provided. A tray 18 in the housing receives a SIM card in use and a threaded connector 19 is provided for connection to an antenna. A first projecting tongue 20 is integral with the module housing 15 and is received in a first recess 21 in the modem housing 16 thereby making a mechanical and electrical connection as described below.

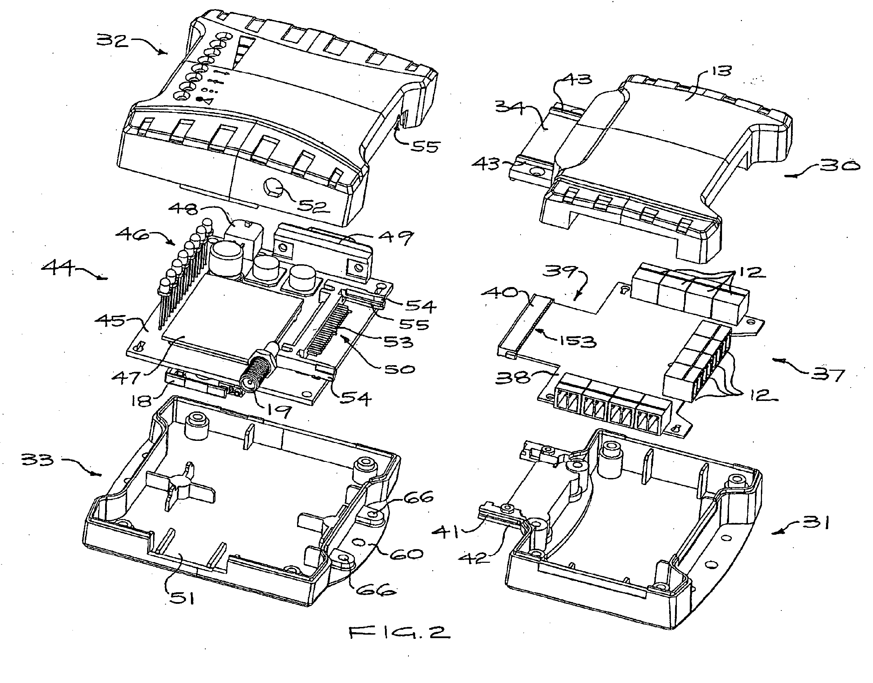

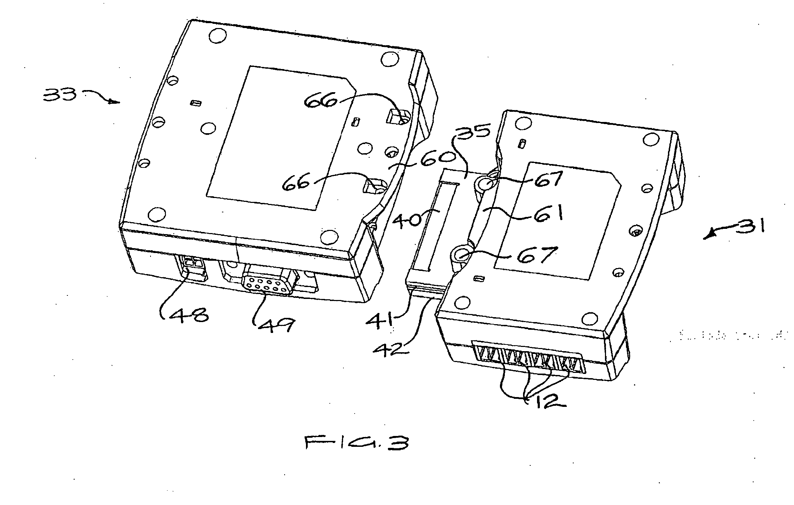

Referring to Figs. 2 and 3, the module housing 15 is assembled from upper and lower moulded polymeric shells 30, 31 which may be mutually joined at a planar interface. Formed likewise, the modem housing 16 is assembled from upper and lower shells 32, 33. The shell 30 defines the upper side 13 and an upper surface 34 of the first tongue 20. Parallel ribs 43 project from the upper surface 34 and extend parallel to an axis of the first tongue 20. Upper and lower halves of the first tongues 20 are integral with the shells 30 and 31 respectively, the shell 31 defining a lower surface 35 of the first tongue 20 and a groove 41 in each of the side surfaces 42 of the first tongue 20 parallel to the axis thereof. Received between the shells 30, 31 is the expansion module circuit 37 including a PCB 38 generally along three edges of which the I/O ports 12 are mounted. Protruding from a fourth side of the PCB 38 is a neck portion 39 to the outer end of which is mounted a 50-pin female connector 40 with a plurality of female contacts 153 each contact receiving a mating male contact 52. Conductor traces (not shown) connect contacts 153 of the female connector 40 and the I/O ports 12.

The shells 32, 33 comprising the modem housing 16 receive a wireless modem circuit 44 including a PCB 45 generally along an edge of which is a row of LEDs 46 for indicating through the windows 17 the communication activity and operating status of the modem (and optionally also of components of an expansion module). The SIM card tray 18 and antenna connector 19 are mounted to the PCB 45 along with a processor 47, a power input 48 for coupling the wireless modem circuit to a suitable source of power, a 50-pin male connector 50 complementary to the connector 40, and an RS232 serial communications port 49 for communication with a host computer such as a Programmable Logic Controller (PLC), automated metering system, machine or component controller, or the Remote Terminal Unit (RTU) of a Supervisory Control And Data Acquisition (SCADA) system. The SIM card tray 18 and antenna connector 19 are disposed in apertures 51 and 52 respectively, while the power input 48 and serial communications port 49 are disposed in adjacent apertures (not shown) in the shell 32. The male contacts 53 in the male connector 50 are set back within the first recess 21 and include a plurality of signal contacts for electrical signals and at least one pair of power contacts for supplying power through the connector to the expansion module 11. Upper and lower sides of the recess 21 are bounded by the upper and lower shells 32, 33, while the opposing sides of the recess 21 are bounded by flanges 54 of the male connector 50. Each flange 54 includes inwardly-extending projections 55 which are slidably received in each groove 41 and thus ensures precise alignment between the connectors 40, 50. Slot portions 55 of the first recess 21 are provided for receiving each of the ribs 43.

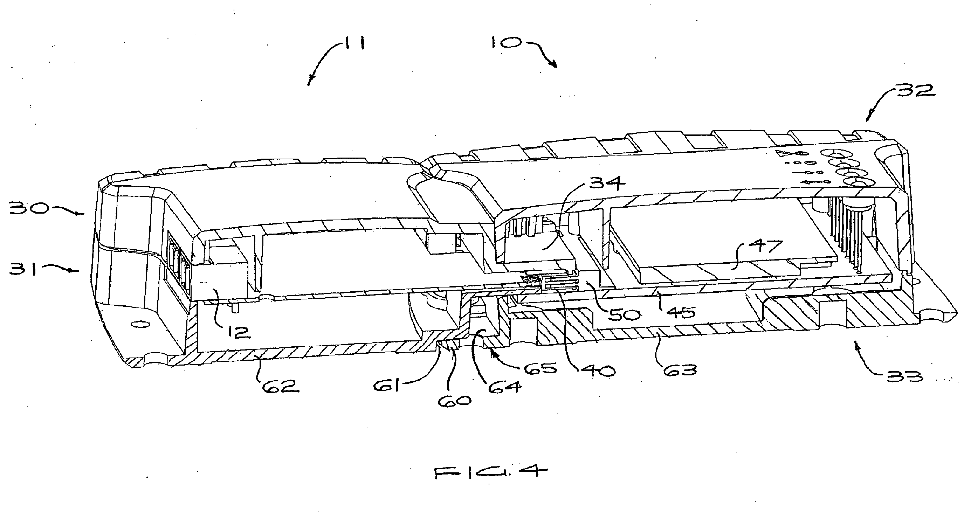

The mechanical connection provided in this manner between the first tongue 20 and first recess 21 is improved by the cooperation between a second tongue 60 integral with the shell 33 and a corresponding second recess 61 formed in the base of shell 31. As best seen in Fig. 4, both of the lower shells 31, 33 include base panel portions 62, 63 that are substantially coplanar when the first and second housings are connected. The second tongue 60 may be coplanar with the base panel portions 62, 63 as shown, the bottom surfaces of the tongue 60 and base panel portions 62, 63 being flush so that the assembly can be mounted flat against a planar support surface, or on parallel, coplanar faces such as present on a DIN rail. The inner face 64 of the second tongue 60 abuts the shell 31, while the opposing side 65 abuts the support surface and, compared to previously known connectors this provides a rugged and stiff connection. For greater security, transverse apertures 66 are provided in the second tongue 60 in alignment with threaded apertures 67 in the shell 31 when the module and modem housings 15, 16 are connected and screws (not shown) are used to fasten the housings.

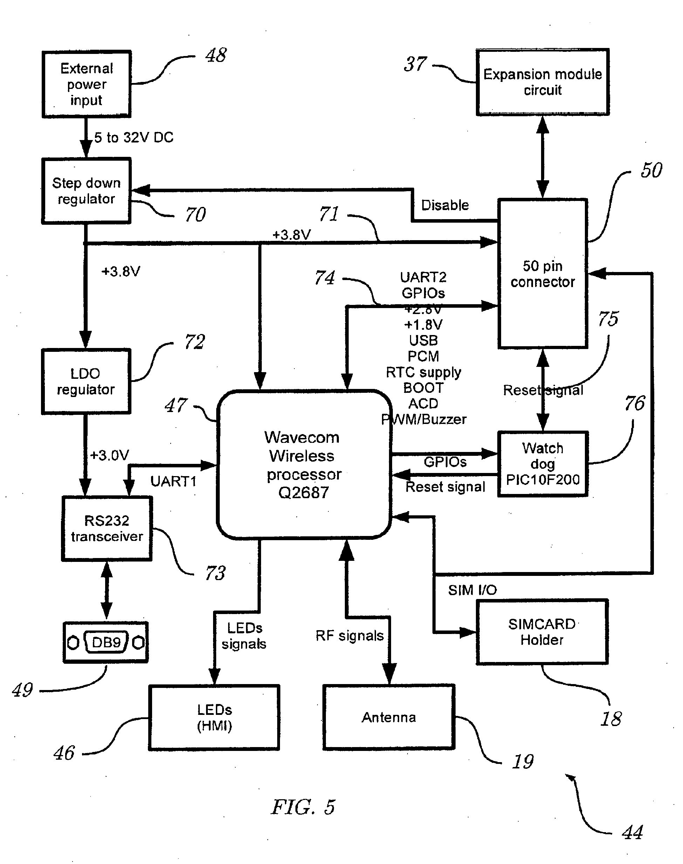

Fig. 5 schematically illustrates the wireless modem circuit 44 which includes a regulator 70 for reducing the voltage received from the input 48 to a voltage of 3.8V supplied via the conductor pair 71 to the connector 50 and for operating the processor 47. A low-level regulator 72 further reduces the voltage provided to an RS232 transceiver chip 73 for controlling communications through the port 49. The bidirectional communication signals between the processor 47 and connector 50 is represented by line 74, and by line 75 from the processor via a monitoring circuit 76.

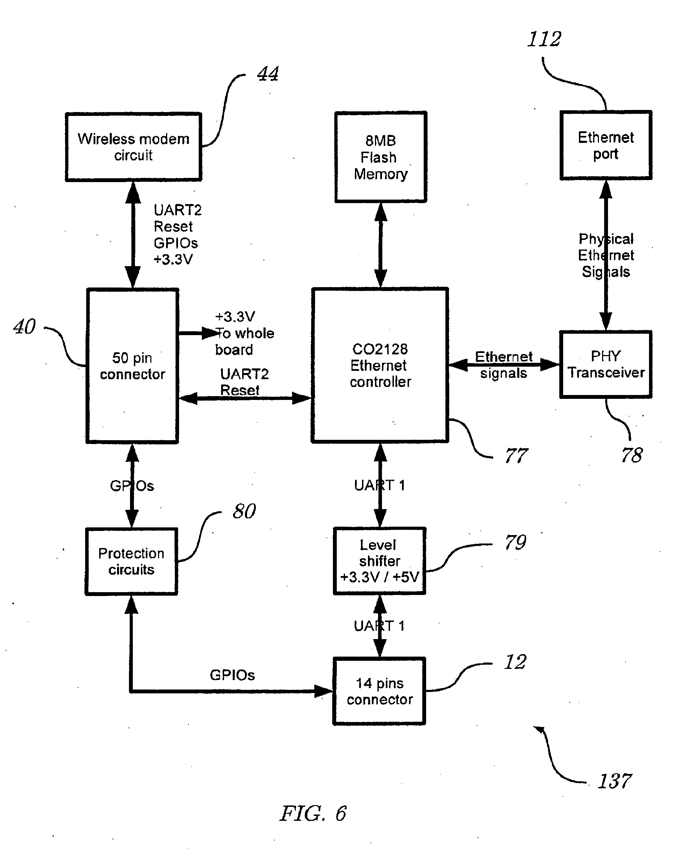

An alternative expansion module circuit 137 shown in Fig. 6 provides an Ethernet transceiver and could replace the circuit 37 of the expansion module 11 to provide an Ethernet port 112, in addition to universal I/O connections 12. This application requires power supply from the wireless modem circuit 44 for powering the active circuit components, including controller 77, physical layer Ethernet transceiver 78. The Ethernet port 112 is arranged in the expansion module housing 15 replacing one or more of the I/O connections 12. A level shifter 79 converts voltage levels between the I/O connections 12 and the controller 77. A protection circuit 80 between the I/O connections 12 and the 50-pin connector 40 avoids signals which could damage the modem circuit 44.

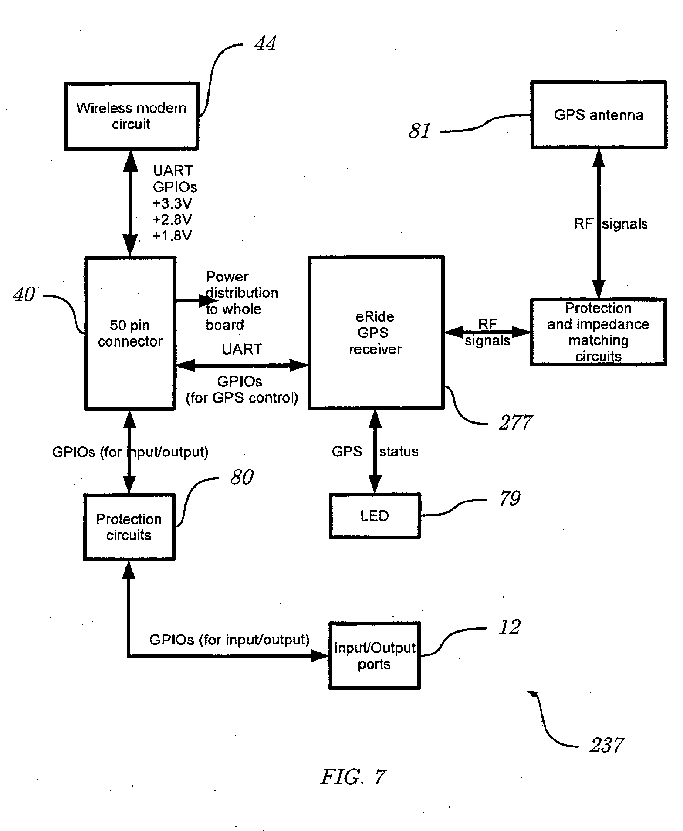

Fig. 7 shows still another expansion module circuit 237 that provides position data received from the GPS system and could replace the circuit 37 of the expansion module 11. It includes a GPS antenna 81 connected to the GPS receiver 277 and 50-pin connector 40.

Other expansion modules (not shown) may include further special-purpose hardware, in addition to the I/O ports 12. For instance, they may include wireless transceiver hardware for specific wireless protocols, such as Bluetooth.

Aspects of the invention have been described by way of example only and it should be appreciated that modifications are possible within the scope of the appended claims.

## Claims

1. A modular modem system (10, 11) for communication with a wireless cellular network and a host computer, the modular modem system (10, 11) comprising:
first and second housings (16, 15);
a wireless modem circuit (44) mounted in the first housing (16), the wireless modem circuit including a processor (47);
a host computer communications port (49) in the first housing (16), the host computer communications port being connected to the wireless modem circuit (44) for communication with the host computer;
an input (48) in the first housing (16) for coupling the wireless modem circuit (44) to a suitable source of power;
an expansion circuit (37, 137, 237) mounted in the second housing (15), the expansion circuit including at least one input/output port (12),
mating first and second coupling means (20, 61, 21, 60) integral with a respective one of the first and second housings (16, 15) for mechanically connecting the housings and electrically connecting the wireless modem circuit (44) to the expansion circuit (37, 137, 237) for data communications therebetween and the supply of power from the modem circuit to the expansion circuit, wherein the mating first and second coupling means (20, 61, 21, 60) include first and second pluralities of contacts (53, 153) mutually engageable for electrically connecting the wireless modem circuit (44) to the expansion circuit (37, 137, 237) for data communications therebetween and the supply of power from the modem circuit to the expansion circuit, the first coupling means (20, 61) includes a first extending tongue (20), and the first plurality of contacts are disposed on the first tongue (20) adjacent an outer end thereof, and the second coupling means (21, 60) includes a first recess (21) of a shape complementary to the first tongue (20) and, in which, the first tongue (20) is slidably receivable and the second plurality of electrical contacts are disposed
and wherein the wireless modem circuit (44) and expansion circuit (37, 137, 237) include respective printed circuit boards (45, 38), the first and second housings (16, 15) are assembled from respective upper and lower shell pairs (30, 31; 32, 33), the upper and lower surfaces (34, 35) of the first tongue being formed on the upper and lower shells respectively, the upper and lower shell pairs (30, 31) enclosing a respective printed circuit board (38, 45), one of the printed circuit boards including a neck (39) extending through the first tongue (20), and wherein the plurality of contacts are mounted to the neck (39).

2. The system (10, 11) of claim 1 wherein the expansion circuit (37, 137, 237) further includes an Ethernet transceiver (78) or a Global Positioning System (GPS) receiver (277).

3. The system (10, 11) of claim 1 or claim 2 wherein the first tongue has an upper surface (34), a lower surface (35) and a pair of side surfaces, (42) a groove (41) being defined in each of the side surfaces (42); and the first
recess (21) includes a projection (55) slidably receivable in each groove (41) upon connection of the first and second coupling means.

4. The system (10, 11) of any one of the preceding claims wherein the second coupling means (21, 60) further includes a second extending tongue (60) and the first coupling means includes a second recess (61) of a shape complementary to the second tongue (60).

5. The system (10, 11) of of any one of the preceding claims wherein the lower shells (31, 33) include base panel portions (62, 63) that are substantially coplanar when the first and second housings are connected.

6. The system (10, 11) of claim 5 wherein the second tongue (60) and second recess (61) are generally coplanar with the base panel portions (62, 63).

7. The system (10, 11) of any one of claims 4 to 6 wherein at least one transverse aperture (66) is provided in the second tongue (60) and is aligned with a threaded aperture (67) when the first and second housings are connected such that the aligned apertures can receive a threaded fastener.

8. The system (10, 11) of any one of the preceding claims wherein the upper surface (34) of the first tongue includes two ribs (43) received within slot portions (55) formed in the first recess (21).

9. The system (10, 11) of any one of claims 3 to 8 wherein the first and second pluralities of contacts (53, 153) comprise a male connector (50) with at least one male contact (53) and a female connector (40) with at least one female contact (153).

## Patentansprüche

1. Modulares Modemsystem (10, 11) zur Kommunikation mit einem Drahtlos-Zellularnetz und einem Verarbeitungsrechner, wobei das modulare Modemsystem (10, 11) Folgendes umfasst:
ein erstes und ein zweites Gehäuse (16, 15),
eine Drahtlosmodemschaltung (44), die in dem ersten Gehäuse (16) angebracht ist, wobei die Drahtlosmodemschaltung einen Prozessor (47) einschließt,
einen Verarbeitungsrechner-Kommunikationsanschluss (49) in dem ersten Gehäuse (16), wobei der Verarbeitungsrechner-Kommunikationsanschluss für eine Kommunikation mit dem Verarbeitungsrechner mit der Drahtlosmodemschaltung (44) verbunden ist,
einen Eingang (48) in dem ersten Gehäuse (16), um die Drahtlosmodemschaltung (44) an eine geeignete Energiequelle zu koppeln,
eine Erweiterungsschaltung (37, 137, 237), die in dem zweiten Gehäuse (15) angebracht ist, wobei die Erweiterungsschaltung wenigstens einen Eingangs-/Ausgangsanschluss (12) einschließt,
zusammenpassende erste und zweite Kupplungsmittel (20, 61, 21, 60), die mit einem jeweiligen von dem ersten und dem zweiten Gehäuse (16, 15) integral sind, um die Gehäuse mechanisch zu verbinden und die Drahtlosmodemschaltung (44) für Datenübertragungen zwischen denselben und die Energiezufuhr von der Modemschaltung zu der Erweiterungsschaltung elektrisch mit der Erweiterungsschaltung (37, 137, 237) zu verbinden, wobei die zusammenpassenden ersten und zweiten Kupplungsmittel (20, 61, 21, 60) eine erste und eine zweite Vielzahl von Kontakten (53, 153) umfassen, die wechselseitig in Eingriff gebracht werden können, um die Drahtlosmodemschaltung (44) für Datenübertragungen zwischen denselben und die Energiezufuhr von der Modemschaltung zu der Erweiterungsschaltung elektrisch mit der Erweiterungsschaltung (37, 137, 237) zu verbinden, wobei die ersten Kupplungsmittel (20, 61) eine erste sich erstreckende Zunge (20) einschließen und die erste Vielzahl von Kontakten auf der ersten Zunge (20), angrenzend an ein äußeren Ende derselben, angeordnet sind und die zweiten Kupplungsmittel (21, 60) eine erste Aussparung (21) mit einer zu der ersten Zunge (20) komplementären Form einschließen und in der die erste Zunge (20) verschiebbar aufgenommen werden kann und die zweite Vielzahl von elektrischen Kontakten angeordnet ist,
und wobei die Drahtlosmodemschaltung (44) und die Erweiterungsschaltung (37, 137, 237) jeweilige gedruckte Leiterplatten (45, 38) einschließen, wobei das erste und das zweite Gehäuse (16, 15) aus jeweiligen Paaren von oberen und unteren Schalen (30, 31; 32, 33) zusammengebaut sind, wobei die obere und die untere Fläche (34, 35) der ersten Zunge jeweils an den oberen beziehungsweise unteren Schalen geformt sind, wobei die Paare von oberen und unteren Schalen (30, 31) eine jeweilige gedruckte Leiterplatte (38, 45) umschließen, wobei eine der gedruckten Leiterplatten einen Hals (39) einschließt, der sich durch die erste Zunge (20) erstreckt, und wobei die Vielzahl von Kontakten an dem Hals (39) angebracht ist.

2. System (10, 11) nach Anspruch 1, wobei die Erweiterungsschaltung (37, 137, 237) ferner eine Ethernet-Sende-Empfangseinrichtung (78) oder einen Global-Positioning-System- (GPS-) Empfänger (277) einschließt.

3. System (10, 11) nach Anspruch 1 oder Anspruch 2, wobei die erste Zunge eine obere Fläche (34), eine untere Fläche (35) und ein Paar von Seitenflächen (42) hat, wobei eine Rille (41) in jeder der Seitenflächen (42) definiert ist und die erste Aussparung (21) einen Vorsprung (55) einschließt, der auf eine Verbindung der ersten und zweiten Kupplungsmittel hin verschiebbar in jeder Rille (41) aufgenommen werden kann.

4. System (10, 11) nach einem der vorhergehenden Ansprüche, wobei die zweiten Kupplungsmittel (21, 60) ferner und eine zweite sich ersteckende Zunge (60) einschließen und die ersten Kupplungsmittel eine zweite Aussparung (61) mit einer zu der zweiten Zunge (60) komplementären Form einschließen.

5. System (10, 11) nach einem der vorhergehenden Ansprüche, wobei die unteren Schalen (31, 33) Grundplattenabschnitte (62, 63) einschließen, die im Wesentlichen komplanar sind, wenn das erste und das zweite Gehäuse verbunden sind.

6. System (10, 11) nach Anspruch 5, wobei die zweite Zunge (60) und die zweite Aussparung (61) im Allgemeinen komplanar mit den Grundplattenabschnitten (62, 63) sind.

7. System (10, 11) nach einem der Ansprüche 4 bis 6, wobei wenigstens eine Queröffnung (66) in der zweiten Zunge (60) bereitgestellt wird und derart mit einer Gewindeöffnung (67) ausgerichtet ist, wenn das erste und das zweite Gehäuse verbunden sind, dass die ausgerichteten Öffnungen ein Gewinde-Befestigungselement aufnehmen können.

8. System (10, 11) nach einem der vorhergehenden Ansprüche, wobei .die obere Fläche (34) der ersten Zunge zwei Rippen (43) einschließt, die innerhalb von in der ersten Aussparung (21) geformten Schlitzabschnitten (55) aufgenommen werden.

9. System (10, 11) nach einem der Ansprüche 3 bis 8, wobei die erste und die zweite Vielzahl von Kontakten (53, 153) einen Steckerverbinder (50) mit wenigstens einem Steckerkontakt (53) und einen Buchsenverbinder (40) mit wenigstens einem Buchsenkontakt (153) umfassen.

## Revendications

1. Système formant modem modulaire (10, 11) permettant une communication avec un réseau cellulaire sans fil et un ordinateur hôte, le système formant modem modulaire (10, 11) comprenant :
des premier et second boîtiers (16, 15) ;
un circuit de modem sans fil (44) monté dans le premier boîtier (16), le circuit de modem sans fil comprenant un processeur (47) ;
un port de communication (49) d'ordinateur hôte dans le premier boîtier (16), le port de communication d'ordinateur hôte étant connecté au circuit de modem sans fil (44) en vue d'une communication avec l'ordinateur hôte ;
une entrée (48) dans le premier boîtier (16) permettant de coupler le circuit de modem sans fil (44) à une source appropriée d'énergie ;
un circuit d'extension (37, 137, 237) monté dans le second boîtier (15), le circuit d'extension comprenant au moins un orifice d'entrée/sortie (12),
des premier et second moyens de couplage (20, 61, 21, 60) homologues faisant partie intégrante d'un boîtier respectif parmi les premier et second boîtiers (16, 15) et permettant de connecter de manière mécanique les boîtiers et de connecter de manière électrique le circuit de modem sans fil (44) au circuit d'extension (37, 137, 237) pour des communications de données entre ceux-ci et l'alimentation en énergie à partir du circuit de modem vers le circuit d'extension, dans lequel les premiers et seconds moyens de couplage (20, 61, 21, 60) homologues comprennent des première et seconde pluralités de contacts (53, 153) pouvant être mutuellement mis en prise pour connecter de manière électrique le circuit de modem sans fil (44) au circuit d'extension (37, 137, 237) pour des communications de données entre ceux-ci et l'alimentation d'énergie à partir du circuit de modem vers le circuit d'extension, les premiers moyens de couplage (20, 61) comprennent une première languette étendue (20), et la première pluralité de contacts sont disposés sur la première languette (20) à proximité immédiate d'une extrémité extérieure de celle-ci, et les seconds moyens de couplage (21, 60) comprennent un premier renfoncement (21) ayant une forme complémentaire à la première languette (20) et dans lequel la première languette (20) peut être accueillie de manière coulissante et dans lequel sont agencés la seconde pluralité de contacts électriques
et dans lequel le circuit de modem sans fil (44) et le circuit d'extension (37, 137, 237) comprennent des cartes de circuit imprimé (45, 38) respectives, les premier et second boîtiers (16, 15) sont assemblés à partir de paires de coques supérieure et inférieure (30, 31 ; 32, 33) respectives, les surfaces supérieure et inférieure (34, 35) de la première languette étant formées respectivement sur les coques supérieures et inférieures, les paires de coques supérieure et inférieure (30, 31) enfermant une carte de circuit imprimé (38, 45) respective, une des cartes de circuit imprimé comprenant un col (39) s'étendant à travers la première languette (20), et la pluralité de contacts étant montés sur le col (39).

2. Système (10, 11) selon la revendication 1, dans lequel le circuit d'extension (37, 137, 237) comprend en outre un émetteur/récepteur Ethernet (78) ou un récepteur de système de positionnement mondial (GPS) (277).

3. Système (10, 11) selon la revendication 1 ou 2, dans lequel la première languette présente une surface supérieure (34), une surface inférieure (35) et une paire de surfaces latérales (42), une rainure (41) étant définie dans chacune des surfaces latérales (42) ; et le premier renfoncement (21) comprend une protubérance (55) pouvant être accueillie de manière coulissante dans chaque rainure (41) lors d'une connexion des premier et second moyens de couplage.

4. Système (10, 11) selon l'une quelconque des revendications précédentes, dans lequel les seconds moyens de couplage (21, 60) comprennent en outre une seconde languette étendue (60) et le premier moyen de couplage comprend un second renfoncement (61) d'une forme complémentaire à la seconde languette (60).

5. Système (10, 11) selon l'une quelconque des revendications précédentes, dans lequel les coques inférieures (31, 33) comprennent des parties formant panneau de base (62, 63) qui sont essentiellement coplanaires lorsque les premier et second boîtiers sont connectés.

6. Système (10, 11) selon la revendication 5, dans lequel la seconde languette (60) et le second renfoncement (61) sont principalement coplanaires avec les parties formant panneau de base (62, 63).

7. Système (10, 11) selon l'une quelconque des revendications 4 à 6, dans lequel au moins une ouverture transversale (66) est fournie dans la seconde languette (60) et est alignée avec une ouverture filetée (67) lorsque les premier et second boîtiers sont connectés de telle sorte que les ouvertures alignées peuvent recevoir une attache filetée.

8. Système (10, 11) selon l'une quelconque des revendications précédentes, dans lequel la surface supérieure (34) de la première languette comprend deux nervures (43) accueillies au sein de parties en fente (55) formées dans le premier renfoncement (21).

9. Système (10, 11) selon l'une quelconque des revendications 3 à 8, dans lequel les première et seconde pluralité de contacts (53, 153) comprennent un connecteur male (50) avec au moins un contact male (53) et un connecteur femelle (40) avec au moins un contact femelle (153).
